**Europäisches Patentamt**

**European Patent Office**

**Office européen des brevets**

(11) Veröffentlichungsnummer: **0 343 385**
**A1**

## EUROPÄISCHE PATENTANMELDUNG

(21) Anmeldenummer: **89107404.9**

(22) Anmeldetag: **24.04.89**

(51) Int. Cl.⁴: **H01G 1/11**

(30) Priorität: **26.05.88 DE 3817903**

(43) Veröffentlichungstag der Anmeldung:
**29.11.89 Patentblatt 89/48**

(84) Benannte Vertragsstaaten:
**DE FR IT SE**

(71) Anmelder: **Siemens Aktiengesellschaft**
**Wittelsbacherplatz 2**
**D-8000 München 2(DE)**

(72) Erfinder: **Erhardt, Werner**
**Lange Strasse 26**
**D-7901 Ballendorf(DE)**

(54) **Elektrischer Kondensator.**

(57) Ein Kondensatorwickel (1) ist in ein Gehäuse (2) eingebaut, das einen Deckel (7) und einen Boden (12) aufweist. Die elektrischen Anschlüsse (4, 5) sind mittels isolierender Durchführungen (5, 6) mit dem Stromzuführungen (8, 9) des Kondensatorwickels (1) verbunden. In den Stromzuführungen (8, 9) sind Sollbruchstellen (10, 11) angeordnet, deren geometrische Form einen kontinuierlichen Übergang vom Querschnitt der als Draht ausgebildeten Stromzuführungen (8, 9) zum Querschnitt der Sollbruchstellen (10, 11) besitzen.

FIG 1

EP 0 343 385 A1

## Elektrischer Kondensator

Die Erfindung betrifft einen elektrischen Kondensator, insbesondere Leistungskondensator, der in ein Gehäuse eingebaut ist und mit einer Überdruck-Abreißsicherung versehen ist, die aus einem Abreißelement besteht, das eine im wesentlichen symmetrisch zur Längsachse des Abreißelements angeordnete Sollbruchstelle besitzt.

Ein derartiger Kondensator ist aus der DE-PS 975 024 bzw. der entsprechenden US 2896049 bekannt. Dort besteht das Abreißelement aus einem Abreißstreifen aus Metall, der zwischen zwei Zugglieder eingeschaltet ist. Dieser Abreißstreifen besitzt eine im wesentlichen symmetrisch zu seiner Längsachse angeordnete Sollbruchstelle, die aus zwei gegenüberliegenden ausgestanzten Kerben besteht.

Weiterhin ist aus der DE 3047876 Al ein Abreißdraht für eine Überdruck-Abreißsicherung bekannt, der mit einer Soll-Abreißstelle verminderten Querschnitts versehen ist, die eingestanzt ist, wobei der eingestanzte Teil des Drahtes beim Stanzvorgang erhalten bleibt.

Ferner ist aus der DE 2220022 C3 ein Abreißdraht mit einer Sollbruchstelle verminderten Querschnitts bekannt, bei dem das Drahtmaterial einseitig exzentrisch zur Drahtachse mechanisch abgetragen ist.

Die Geometrien der bekannten Sollbruchstellen weisen herstellungsbedingt scharfe Kanten bzw. Spitzen auf, die zu einer Störung des elektrischen und magnetischen Feldes führen. Hierdurch können störende und dadurch die Stromführung ungünstig beeinflussende Effekte auftreten, die zu örtlichen Erwärmungen und größerer Sprühneigung führen.

Aufgabe der Erfindung ist es, einen Kondensator der eingangs genannten Art anzugeben, der mit einer Überdruck-Abreißsicherung versehen ist, deren Geometrie derart beschaffen ist, daß möglichst weitgehend eine Störung des elektrischen bzw. magnetischen Feldes und damit unerwünschte örtliche Erwärmungen und Sprühneigungen verhindert werden.

Diese Aufgabe wird erfindungsgemäß dadurch gelöst, daß das Abreißelement aus einem Draht besteht, und daß die Sollbruchstelle eine geometrische Form mit kontinuierlichem Übergang vom Drahtquerschnitt zum Querschnitt der Sollbruchstelle besitzt.

Hiermit wird der Vorteil erzielt, daß die elektrischen bzw. magnetischen Feldlinien im elektrischen Leiter beim Übergang vom Leiterquerschnitt zur Engstelle kontinuierlich verlaufen, so daß die oben angeführten Störungen weitestgehend vermieden werden.

Zweckmäßige Ausgestaltungen sind in den Unteransprüchen angeführt.

Die Erfindung wird anhand der folgenden Ausführungsbeispiele näher erläutert.

In der dazugehörenden Zeichnung zeigen

FIG 1 einen in ein Gehäuse eingebauten Kondensator mit Überdruck-Abreißsicherung,

FIG 2 eine Überdruck-Abreißsicherung nach dem Stand der Technik,

FIG 3 eine Überdruck-Abreißsicherung nach der Erfindung,

FIG 4 ein Herstellungsverfahren und

FIG 5 ein weiteres Herstellungsverfahren für eine ÜberdruckAbreißsicherung nach der Erfindung.

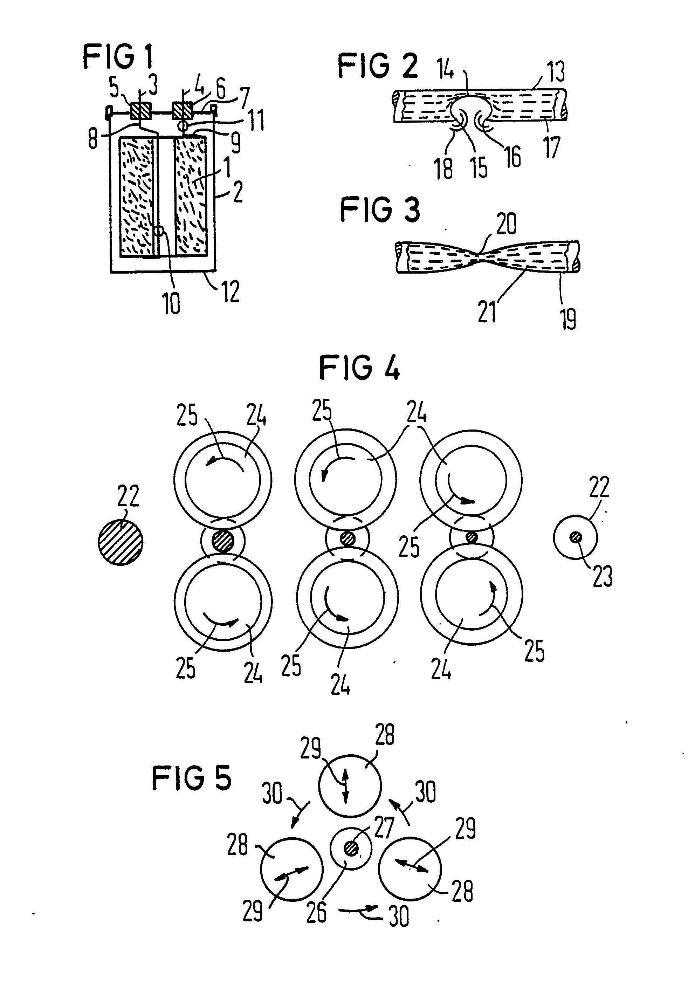

In der FIG 1 ist ein Kondensatorwickel 1 dargestellt, der in ein Gehäuse 2 eingebaut ist. Der Kondensatorwickel 1 besitzt elektrische Anschlüsse 3, 4, die mittels isolierender Durchführungen 5, 6 durch den Deckel 7 ins Innere des Gehäuses 2 geführt sind. Die im Inneren des Gehäuses 1 angeordneten Stromzuführungen 8, 9 für den Kondensatorwickel 1 können als elektrische Abreißsicherung mit Sollbruchstellen 10, 11 ausgebildet sein. Es ist auch möglich, nur in eine der Stromzuführungen 8, 9 eine Sollbruchstelle einzufügen, da auch hierdurch mit ausreichender Sicherheit ein Abschalten des Kondensatorwickels 1 von dem entsprechenden elektrischen Anschluß 4 bzw. 5 und damit eine Stromunterbrechung erreicht wird.

Das Ansprechen der Überdruck-Abreißsicherung wird durch in der FIG 1 nicht dargestellte bekannte Maßnahmen erreicht, beispielsweise, indem der Boden 12 als Arbeitsmembran ausgebildet ist, an dem die Abreißsicherung mittels Spanngliedern befestigt ist. Es ist auch möglich, in der Wand des Gehäuses 2 sogenannte Dehnungssicken anzubringen oder den Deckel 7 entsprechend auszuformen. Durch alle diese Maßnahmen wird erreicht, daß bei entstehendem Überdruck im Gehäuse eine Formänderung stattfindet, die die Überdruck-Abreißsicherung durch Zerreißen an der vorgesehenen Sollbruchstelle betätigt.

In der FIG 2 ist ein Abreißdraht 13 nach dem Stand der Technik dargestellt, der eine Sollbruchstelle 14 aufweist. Die Sollbruchstelle 14 ist durch mechanischen Materialabtrag hergestellt und weist dadurch Spitzen 15, 16 und einen in der FIG nicht dargestellten mechanischen Grat auf. Einerseits treten hierbei im Bereich der Spitzen 15, 16 hohe Feldstärken im elektromagnetischen Feld 18 auf, was zu einer größeren Sprühneigung führt und andererseits werden die elektrischen Feldlinien 17 im Bereich der Sollbruchstelle 14 - bedingt durch den Materialabtrag - derart verengt, daß die Stromführung ungünstig beeinflußt wird, so daß örtliche Erwärmungen an der Sollbruchstelle 14 auftreten können.

In der FIG 3 ist ein Abreißdraht 19 dargestellt, der eine Sollbruchstelle 20 nach der Erfindung aufweist. Diese Sollbruchstelle 20 zeichnet sich dadurch aus, daß ihre geometrische Form durch einen allmählichen, kontinuierlichen Übergang vom (großen) Querschnitt des Abreißdrahtes 19 zum Querschnitt der Sollbruchstelle 20 gebildet wird. Hierdurch wird erreicht, daß einerseits die beim Stand der Technik vorhandenen Spitzen und Kanten nicht auftreten und andererseits die elektrischen Feldlinien 21 beim Übergang vom (großen) Querschnitt des Abreißdrahtes 19 zum verminderten Querschnitt der Sollbruchstelle 20 einen weitestgehend kontinuierlichen Verlauf besitzen. Unerwünschte Sprüherscheinungen und örtliche Erwärmungen werden somit vermieden.

In der FIG 4 ist ein Verfahren dargestellt, wie in einem Abreißdraht 22 eine Sollbruchstelle 23 hergestellt werden kann. Der Abreißdraht 22 wird hierzu zwischen Rollen 24 hindurchgeführt, die sich in Richtung der Pfeile 25 drehen. Der Abstand zum Mittelpunkt des Drahtes 22 verkürzt sich während der Bearbeitung bis auf den gewünschten Restquerschnitt der Sollbruchstelle 23.

In der FIG 5 ist eine weitere Möglichkeit dargestellt, einen Abreißdraht 26 mit einer Sollbruchstelle 27 zu versehen. Der Draht 26 wird hierzu in den Teilkreismittelpunkt der Rollen 28 gebracht, die sich einerseits in Richtung der Pfeile 30 drehen und andererseits in Richtung der Pfeile 29 bewegen, bis der gewünschte Querschnitt der Sollbruchstelle 27 erreicht ist.

Die in den FIG 4 und 5 dargestellten Verfahren zur Herstellung einer Sollbruchstelle weisen eine Reihe von Vorteilen auf. Einerseits tritt kein Werkzeugverschleiß ein und andererseits ist eine kontinuierliche Fließfertigung von Überdruckabreißsicherungen möglich. Durch die weitestgehend symmetrische Anordnung der Sollbruchstelle ergibt sich eine geringere Empfindlichkeit gegenüber mechanischen Beschädigungen. Wesentlich ist, daß bei den dargestellten Verfahren kein Grat entsteht und keine Beschädigung der (oftmals verzinnten) Drahtoberfläche eintritt.

Anstelle der in der FIG 4 dargestellten Rollen läßt sich das dort beschriebene Verfahren prinzipiell auch mittels Schleifscheiben realisieren. Hierdurch läßt sich die gleiche Leitergeometrie erreichen, wobei allerdings nicht alle Abreißdrähte mit Sollbruchstellen versehen werden können, sondern nur solche, die keine behandelte Oberfläche (z. B. Verzinnung bzw. Kupfermanteldrähte) aufweisen.

Es versteht sich hierbei, daß die Rollen bzw. Schleifscheiben derartig geformt sind, daß der gewünschte kontinuierliche Übergang im Bereich der Sollbruchstelle erreicht wird.

Durch den Gegenstand der Erfindung wird somit die für ein Abschalten notwendige Querschnittsverengung sowie ein Optimum für die Stromführung und das entstehende elektromagnetische Feld realisiert.

## Ansprüche

1. Elektrischer Kondensator, insbesondere Leistungskondensator, der in ein Gehäuse eingebaut ist und mit einer Überdruck-Abreißsicherung versehen ist, die aus einem Abreißelement besteht, das eine im wesentlichen symmetrisch zur Längsachse des Abreißelements angeordnete Sollbruchstelle besitzt, **dadurch gekennzeichnet,** daß das Abreißelement aus einem Draht (19, 22, 26) besteht und daß die Sollbruchstelle (20, 23, 27) eine geometrische Form mit kontinuierlichem Übergang vom Drahtquerschnitt zum Querschnitt der Sollbruchstelle besitzt.

2. Elektrischer Kondensator nach Anspruch 1, **dadurch gekennzeichnet,** daß die Sollbruchstelle (20, 23, 27) ohne Materialabtrag hergestellt ist.

3. Elektrischer Kondensator nach Anspruch 1, **dadurch gekennzeichnet,** daß die Sollbruchstelle (20, 23, 27) durch Materialabtrag hergestellt ist.

4. Verfahren zum Herstellen eines elektrischen Kondensators nach Anspruch 1 oder 2, **dadurch gekennzeichnet,** daß der Abreißdraht (22, 26) zwischen sich drehenden Rollen (24, 28) eingebracht wird, deren Abstand dem geforderten Restquerschnitt der Sollbruchstelle (23, 27) entspricht.

5. Verfahren nach Anspruch 4, **dadurch gekennzeichnet,** daß der Abreißdraht (22) zwischen zumindest 2 Rollen (24) hindurchgeführt wird (FIG 4).

6. Verfahren nach Anspruch 4, **dadurch gekennzeichnet,** daß der Abreißdraht (26) in den Teilkreismittelpunkt von zumindest 3 Rollen (28) eingebracht wird (FIG 5).

7. Verfahren nach Anspruch 1 oder 3, **dadurch gekennzeichnet,** daß der Abreißdraht zwischen schließenden Schleifscheiben hindurchgeführt wird.

FIG 1

FIG 2

FIG 3

FIG 4

FIG 5

Europäisches Patentamt

**EUROPÄISCHER RECHERCHENBERICHT**

Nummer der Anmeldung

EP 89 10 7404

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | GB-A-2 106 715 (BICC PLC) <br> * Figuren 4-9; Seite 1; Zeilen 100-111 * <br> --- | 1,2 | H 01 G 1/11 |
| A | EP-A-0 076 693 (FUJITSU LTD) <br> * Seite 7, Zeile 19 - Seite 8, Zeile 3; Seite 10, Zeilen 14-20; Figuren 4,5 * <br> --- | 1,2,4,5 | |
| A | DE-A-3 320 703 (SIEMENS AG) <br> --- | | |
| A | DE-C- 372 119 (VOIGT & HAEFFNER AG) <br> ----- | | |

| | |
|---|---|
| | **RECHERCHIERTE SACHGEBIETE (Int. Cl.4)** |
| | H 01 G <br> H 01 F |

Der vorliegende Recherchenbericht wurde für alle Patentansprüche erstellt

| Recherchenort | Abschlußdatum der Recherche | Prüfer |
|---|---|---|
| DEN HAAG | 04-09-1989 | SCHUERMANS N.F.G. |